# FASCICULE DE BREVET EUROPEEN

(11) **EP 2 818 651 B1**
(45) Date de publication et mention de la délivrance du brevet: **15.05.2024**
(21) Numéro de dépôt: 13173555.7
(22) Date de dépôt: 25.06.2013
(51) Int. Cl.: F01M 1/16, F01D 25/20, F01M 11/06, F16N 19/00, F01D 25/18

(54) **Clapet anti-siphon commandé par piston**
Kolbengesteuertes Überlaufventil
Anti-siphon valve controlled by piston

(43) Date de publication de la demande: 31.12.2014
(73) Titulaire: Safran Aero Boosters SA, 4041 Herstal (BE)
(72) Inventeur: Borlon, Thomas, 4020 Wandre (BE); Cornet, Albert, 4800 Verviers (BE)
(74) Mandataire: Lecomte & Partners

(56) Documents cités:
- DE-A1- 3 638 958
- DE-A1- 10 206 268
- DE-A1- 19 838 927

## Description

### Domaine technique

L'invention a trait au domaine des écoulements de fluide dans des conduites, en particulier au domaine des clapets anti-siphon. Plus particulièrement, l'invention a trait au domaine de la lubrification d'une turbomachine. Plus particulièrement encore, l'invention a trait à un clapet anti-siphon pour l'aspiration de liquide d'un réservoir, plus particulièrement d'un réservoir d'huile d'un circuit d'alimentation d'une turbomachine.

### Technique antérieure

Une turbomachine emploie de l'huile pour différentes fonctions. Cette huile sert bien entendu à lubrifier des pièces mécaniques en mouvement, mais elle peut également servir à actionner des organes grâce à sa pression. Par exemple, elle peut être employée pour régler le pas d'aubes de la soufflante d'un turbopropulseur, ou pour amortir les mouvements transférés par les roulements. L'huile peut également servir à réchauffer ou refroidir certaines parties du turbopropulseur, et même de l'aéronef.

Pour remplir ces fonctions, l'huile est canalisée dans un circuit d'alimentation muni de plusieurs pompes assurant sa circulation. Le circuit comprend généralement un réservoir d'huile permettant de stocker l'huile, son volume permet de répondre à la consommation d'huile de la turbomachine pendant un temps donné, tout en conservant un volume de sécurité.

Pour éviter que le réservoir ne se vide par gravitation lorsque la turbomachine est à l'arrêt, un clapet anti-siphon peut être disposé à sa sortie. Ce clapet anti-siphon peut s'ouvrir par l'effet de l'aspiration crée par une pompe située en aval. Pour que l'ouverture du clapet soit plus franche, l'ouverture du clapet peut être assistée par un dispositif auxiliaire. Ce dernier est actionné par de l'huile refoulée par une pompe disposée en aval du clapet.

Le document de brevet publié FR2654466 A1 présente un réservoir d'un circuit d'alimentation en huile d'une turbomachine. Le réservoir est muni d'un clapet anti-siphon qui est placé au point bas du réservoir. Le clapet est configuré pour éviter que le réservoir ne se vide de son huile par effet gravitationnel. L'ouverture du clapet est pilotée par une chambre de commande annulaire entourant le clapet, la chambre étant actionnée par de l'huile refoulée par une pompe équipant le circuit d'alimentation en huile de la turbomachine.

Cependant, une turbomachine d'aéronef peut être exposée à des températures extrêmes, de l'ordre de -40°C à -50°C. Dans ces conditions, l'huile peut se figer dans le réservoir, le clapet, le dispositif auxiliaire, et le conduit de commande.

Cette huile figée risque alors de bloquer le piston et de ralentir son ouverture. Ce retard à l'ouverture entrave la circulation d'huile et crée des pertes de charges au sein du clapet. Il faut alors attendre un certain temps pour que la turbomachine se réchauffe, et que son huile redevienne suffisamment fluide pour permettre l'actionnement du dispositif auxiliaire et l'ouverture complète du clapet. Cette période de chauffage limite l'utilisation de la turbomachine d'aéronef puisque des règles drastiques de sécurité sont de rigueur dans ce domaine. La période de chauffage provoque une perte d'exploitation liée à la non-utilisation de la turbomachine et/ou de l'aéronef correspondant.

### Résumé de l'invention

### Problème technique

L'invention a pour objectif de résoudre au moins un des inconvénients techniques de l'art antérieur. Plus précisément, l'invention a pour objectif de réduire la perte de charge, voire l'obstruction, d'un réservoir de fluide muni d'un clapet anti-siphon lorsque le fluide est rendu visqueux par des températures basses.

### Solution technique

L'invention a pour objet un clapet anti-siphon pour réservoir de fluide, notamment pour réservoir d'huile, comprenant: un corps avec une entrée, une sortie et un passage pour le fluide, le passage reliant l'entrée à la sortie; un obturateur mobile coopérant avec un siège en vue de fermer le passage, l'obturateur étant normalement en position de fermeture et configuré pour ouvrir le passage en présence d'une différence de pression entre l'entrée et la sortie qui soit supérieure à une valeur limite positive; un dispositif de commande auxiliaire de l'obturateur vers une position d'ouverture du passage; remarquable en ce que le clapet anti-siphon comprend des moyens de liaison configurés pour transmettre un mouvement du dispositif de commande auxiliaire à l'obturateur que dans le sens d'ouverture du passage, de manière à permettre audit obturateur de se déplacer dans le sens d'ouverture sous l'effet de la pression à la sortie, indépendamment dudit dispositif.

Selon un mode avantageux de l'invention, le dispositif de commande auxiliaire est actionné par un fluide, préférentiellement un liquide.

Selon un mode avantageux de l'invention, le dispositif de commande auxiliaire comprend un piston relié mécaniquement à l'obturateur par les moyens de liaison comprenant un système de butée lorsque le piston se déplace dans le sens correspondant à l'ouverture du passage.

Selon un mode avantageux de l'invention, le système de butée comprend une tige coulissant au travers du piston et comprenant une butée avec laquelle le piston vient en contact lorsqu'il se déplace dans le sens correspondant à l'ouverture du passage, préférentiellement la tige est solidaire de l'obturateur.

Selon un mode avantageux de l'invention, le clapet anti-siphon comprend une chambre dans laquelle le piston est monté coulissant.

Selon un mode avantageux de l'invention, le passage comprend une surface intérieure qui correspond au contour de l'obturateur lors de son mouvement entre la position de fermeture et la position d'ouverture, préférentiellement le contour de l'obturateur balaye la sortie lors de son mouvement entre la position de fermeture et la position d'ouverture.

Selon un mode avantageux de l'invention, le clapet anti-siphon comprend un ressort configuré pour maintenir l'obturateur en position de fermeture, préférentiellement le ressort est disposé entre l'obturateur et le dispositif de commande auxiliaire.

Selon un mode avantageux de l'invention, le ressort est précontraint de sorte à ce que la valeur limite de la différence de pression qui permet d'ouvrir le passage soit supérieure à 0,05 bar ; préférentiellement 0,10 bar; plus préférentiellement 0,50 bar, encore plus préférentiellement 2 bars.

Selon un mode avantageux de l'invention, le clapet anti-siphon comprend une gorge annulaire ouverte axialement vers le dispositif de commande auxiliaire, préférentiellement le dispositif de commande auxiliaire est apte à clore la gorge annulaire.

L'invention a également pour objet un réservoir pour fluide, notamment pour huile, comprenant au moins une ouverture et un clapet anti-siphon destiné à fermer la ou une des ouvertures, remarquable en ce que le clapet anti-siphon est conforme à l'invention.

Selon un mode avantageux de l'invention, le clapet anti-siphon comprend une chambre dans laquelle est disposé le dispositif de commande auxiliaire, ladite chambre débouchant dans le réservoir.

Selon un mode avantageux de l'invention, le clapet anti-siphon comprend un conduit d'actionnement communiquant avec l'extérieur du réservoir et le dispositif de commande auxiliaire.

Selon un mode avantageux de l'invention, le réservoir comprend un échangeur de chaleur apte à échanger des calories entre de l'air et un liquide.

Selon un mode avantageux de l'invention, le réservoir comprend une enveloppe, le clapet anti-siphon étant disposé à l'intérieur de l'enveloppe, préférentiellement le corps du clapet anti-siphon étant en contact de l'enveloppe ; ou le clapet anti-siphon étant disposé à l'extérieur de l'enveloppe, préférentiellement le corps du clapet anti-siphon étant à distance de l'enveloppe.

L'invention a également pour objet une turbomachine, notamment d'aéronef, comprenant un réservoir et/ou un clapet anti-siphon, remarquable en ce que le clapet anti-siphon est conforme à l'invention et/ou le réservoir est conforme à l'invention.

L'invention a également trait à un circuit d'alimentation d'huile comprenant un réservoir d'huile, remarquable en ce que le réservoir d'huile est conforme à l'invention.

### Avantages apportés

L'invention permet à l'obturateur de s'ouvrir par dépression indépendamment de l'état du dispositif de commande auxiliaire. Ceci est particulièrement vrai lorsque le fluide est visqueux et rendu ainsi collant notamment lorsqu'il est à basse température.

L'invention propose un clapet compact bien qu'il propose différents états de fonctionnement.

### Brève description des dessins

La figure 1 représente une turbomachine d'aéronef selon l'invention.
La figure 2 est un schéma du circuit d'alimentation de la turbomachine de la figure 1, conforme à l'invention.
La figure 3 illustre une portion du réservoir d'huile de la figure 2, muni d'un clapet anti-siphon dans un état fermé, le clapet étant conforme à l'invention.
La figure 4 illustre une étape intermédiaire de l'ouverture du clapet anti-siphon de la figure 3.
La figure 5 représente le clapet anti-siphon des figures 3 et 4, dans un état ouvert.

### Description des modes de réalisation

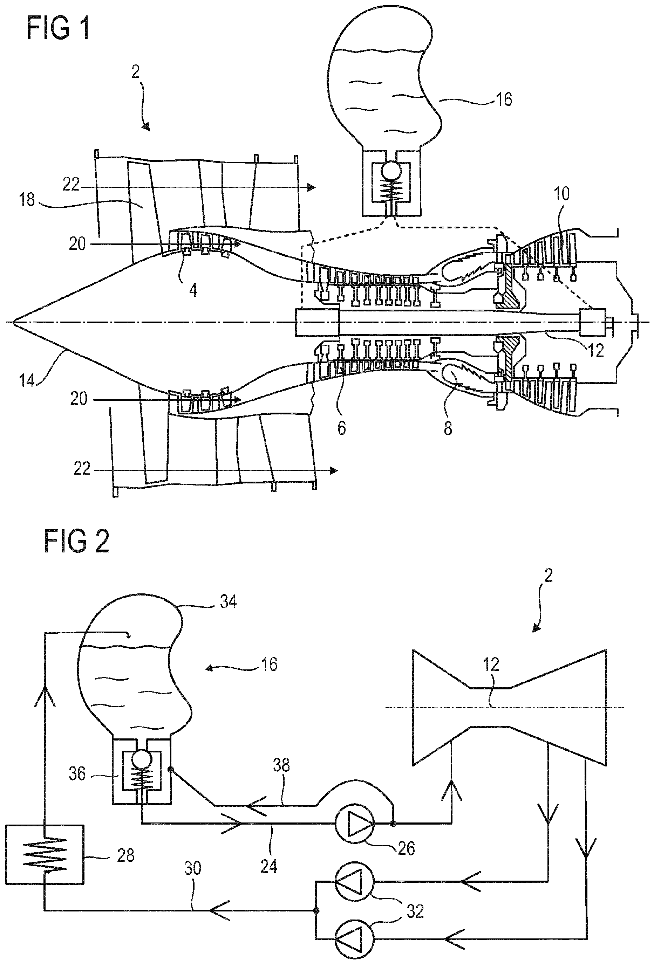

La figure 1 schématise une turbomachine axiale. Il s'agit dans ce cas précis d'un turboréacteur 2 double-flux qui est destiné à être monté sur un véhicule tel un aéronef. La turbomachine 2 peut également être un turbopropulseur.

La turbomachine 2 comprend un premier compresseur dit compresseur basse-pression 4, et un deuxième compresseur dit compresseur haute-pression 6. La turbomachine 2 peut comprendre une chambre de combustion 8 et une turbine 10, éventuellement plusieurs turbines. En fonctionnement, la puissance mécanique de la turbine 10 est transmise via l'arbre central 12 jusqu'au rotor 14. L'arbre met alors en mouvement au moins un des deux compresseurs 4 et 6. Des moyens de démultiplication peuvent augmenter ou réduire la vitesse de rotation transmise aux compresseurs. Alternativement, les différentes turbines peuvent chacune être reliées aux compresseurs via des arbres centraux concentriques.

L'arbre central 12 est monté tournant par rapport au carter de la turbomachine 2 à l'aide de paliers. Ces derniers peuvent comprendre des roulements qui doivent être lubrifiés. Ce besoin est aussi nécessaire pour les moyens de démultiplication. Pour répondre à ces besoins, le turboréacteur 2 comprend un système d'alimentation en huile qui distribue l'huile aux différents paliers et aux moyens de démultiplication.

Le système d'alimentation comprend un circuit d'alimentation. Ce dernier peut comprendre un échangeur thermique pour refroidir l'huile lors du fonctionnement. Un volume d'huile est stocké dans un réservoir 16. Cette huile peut alors servir à refroidir des organes du turboréacteur 2. Le réservoir 16 peut avantageusement présenter une forme une forme allongée verticalement. Il peut présenter verticalement une forme de haricot de sorte à épouser une surface tubulaire de la turbomachine 2.

Un ventilateur d'entrée communément désigné fan 18 est couplé au rotor 14 et génère un flux d'air qui se divise en un flux primaire 20, et un flux secondaire 22. Le flux primaire 20 suit un cycle thermodynamique de compression détente. Le flux secondaire 22 apporte la majorité de la poussée du turboréacteur via le fan 18. Le fan 18 peut être relié à l'arbre central via une démultiplication qui est lubrifiée par le système d'alimentation. Son pas peut être réglable. Ce réglage peut être ajusté à l'aide de l'énergie mécanique de l'huile du circuit d'alimentation.

La figure 2 illustre le circuit d'alimentation en huile de la turbomachine de la figure 1.

Le circuit d'alimentation comprend une branche 24 d'alimentation issue du réservoir 16. La branche d'alimentation 24 est en communication avec la turbomachine 2. Elle est dotée d'une pompe d'alimentation 26 qui aspire l'huile présente dans le réservoir 16 et l'injecte dans les organes de la turbomachine 2. Les organes peuvent comprendre une enceinte de lubrification d'un palier et un échangeur de chaleur 28. L'échangeur de chaleur 28 peut contenir un volume d'huile supérieur à 5 litres, préférentiellement supérieur à 10 litres. L'échangeur de chaleur 28 peut être un réservoir au sens de l'invention.

Le circuit d'alimentation comprend une branche de récupération 30 d'huile. Celle-ci peut comprendre des pompes de récupération 32 permettant d'aspirer l'huile depuis les organes et de la rejeter dans le réservoir 16. L'huile peut être collectée dans un carter commun qui entoure différents organes de la turbomachine. Le circuit d'alimentation peut comprendre plusieurs branches d'alimentation et/ou plusieurs branches de récupération qui forment des boucles parallèles, et qui sont branchées de manière indépendante au réservoir 16.

Le réservoir 16 présente un volume interne compris entre 20 litres et 200 litres, préférentiellement compris entre 30 litres et 100 litres, plus préférentiellement compris entre 40 litres et 70 litres. Le volume de l'huile compris dans le réservoir peut varier pendant le fonctionnement de la turbomachine 2. Elle peut s'y dégazer. Le volume de l'huile peut être supérieur à 50% du volume interne du réservoir, préférentiellement supérieur à 75%. La masse de l'huile est donc importante. Dans le cas d'un circuit d'alimentation d'une turbomachine d'un aéronef, la masse de l'huile sollicite fortement le réservoir. Les vibrations, les accélérations et les changements de cap de l'aéronef sollicitent l'enveloppe 34 du réservoir à cause de l'inertie de l'huile.

Le réservoir 16 est disposé en élévation par rapport à la pompe d'alimentation 26 de sorte à ce qu'elle soit en pression afin de réduire la cavitation. Le réservoir 16 est disposé à au moins 50 cm au-dessus de la pompe d'alimentation 26. Le réservoir présente un clapet anti-siphon 36 configuré pour éviter qu'il ne se vide lorsque la turbomachine est à l'arrêt. Le clapet peut être à sens unique en n'autorisant une circulation que dans un seul sens. Ce même clapet anti-siphon 36 peut également être configuré de sorte à s'ouvrir dès que la pression d'aspiration dépasse un seuil donné. La pression d'aspiration est la différence de pression entre l'entrée du clapet côté réservoir et la pression de sortie du clapet anti-siphon 36.

La pression d'aspiration est générée par la pompe d'alimentation 26. Le clapet anti-siphon 36 est avantageusement disposé au point bas du réservoir. Pour que l'ouverture du clapet anti-siphon soit plus franche, il est également connecté au côté refoulement de la pompe d'alimentation 26. Le clapet anti-siphon est ainsi piloté par la pression de sortie de la pompe en vue d'une ouverture complète et rapide. A cet effet, le circuit d'alimentation comprend une conduite d'actionnement 38.

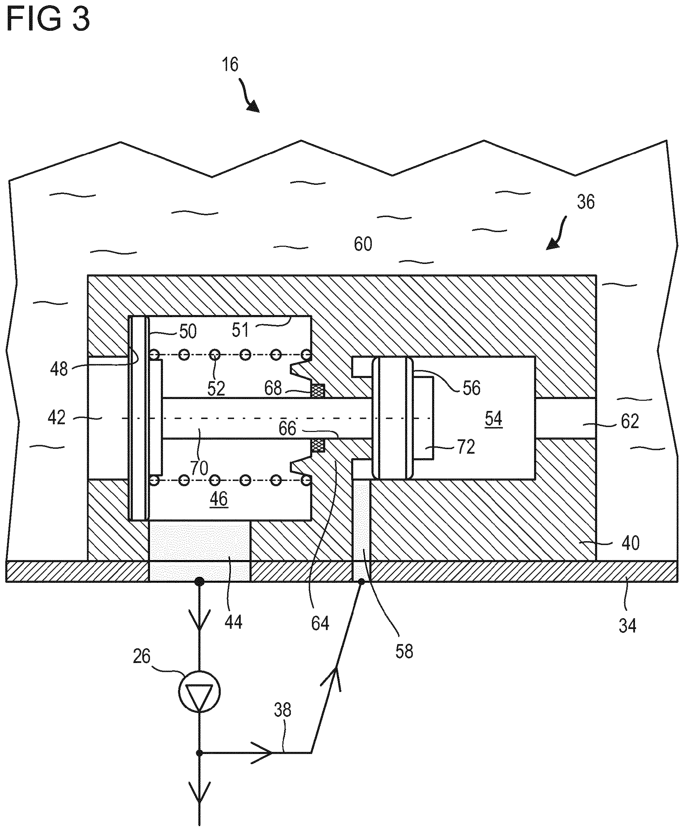

La figure 3 représente une partie de circuit d'alimentation avec une partie de réservoir 16 centrée sur le clapet anti-siphon 36.

Le clapet anti-siphon 36 comprend un corps 40. Le clapet comprend une entrée 42 et une sortie 44 communiquant au travers du corps 40. Le clapet anti-siphon 36 comprend un passage 46 délimitée par le corps 40. Le passage communique avec l'entrée 42 et la sortie 44 du clapet 36. Le passage 46 peut présenter une forme profilée suivant un axe de profilage. Il peut être profilé uniquement sur une portion de sa longueur. Le passage 46 est avantageusement cylindrique, il peut montrer tout autre type de profil, tel un profil carré ou rectangulaire. L'entrée 42 dans le passage 46 est axiale, et la sortie 44 est latérale.

Le clapet anti-siphon 36 comprend un siège 48. Le siège 48 est disposé à l'intérieur du passage 46, préférentiellement à une extrémité axiale. Le siège 48 présente une surface annulaire, préférentiellement plane. Le siège 48 entoure l'entrée 42 du clapet 36.

Le clapet anti-siphon 36 comporte un obturateur 50, apte à ouvrir et à fermer le clapet. L'obturateur 50 est apte à coopérer avec le siège 48 de sorte à ouvrir et à fermer le clapet anti-siphon. L'obturateur est normalement en position de fermeture, c'est-à-dire lorsque la pression à l'entrée 42 et la pression à la sortie 44 sont égales. L'obturateur 50 présente généralement une forme de disque dont une face épouse le siège 48. Au moins une portion de la surface intérieure 51 du passage 46 est générée par le contour de l'obturateur 50 dans le mouvement de l'obturateur entre la position d'ouverture et la position de fermeture. Par ce biais, la pression d'aspiration entraîne l'ouverture progressive de l'obturateur 50.

La surface de passage délimitée par le siège 48 est inférieure à la surface de l'obturateur qui est en contact du siège 48 en position de fermeture, préférentiellement inférieure à 80% plus préférentiellement inférieure à 50%. Cet aspect favorise une ouverture plus franche grâce à une augmentation de surface de l'obturateur qui est soumise à la différence de pression entre l'entrée et la sortie.

L'obturateur est mobile entre au moins une position de fermeture et une position d'ouverture. L'obturateur 50 coulisse dans le passage suivant un axe de coulissement. L'axe de coulissement est éventuellement parallèle à l'axe de profilage du passage 46. Le mouvement est préférentiellement une translation. Le mouvement peut également être un mouvement de pivotement, éventuellement autour d'un axe parallèle au siège 48. Par exemple, les moyens de fermeture peuvent comprendre un volet pivotant. Lors du mouvement d'ouverture, l'obturateur 50 balaye la majorité de la longueur axiale du passage 46. Il balaye la majorité de la sortie 44 du clapet 36, préférentiellement l'intégralité de la sortie 44. Suivant un mode avantageux, dans la position d'ouverture l'obturateur 50 est à distance de la sortie 44, de sorte à en dégager la section de passage.

Le clapet anti-siphon 36 comprend des moyens élastiques configurés pour le maintenir fermé. Les moyens élastiques agissent sur l'obturateur. Les moyens élastiques peuvent être précontraints de sorte à imposer une pression minimale avant qu'il n'y ait mouvement de l'obturateur 50. L'entrée 42 et la sortie 44 du clapet 36 peuvent être à distance axialement de sorte à devoir fournir un travail mécanique aux moyens élastiques avant qu'il n'y ait un début d'ouverture. Les moyens élastiques peuvent comprendre un ressort 52, par exemple un ressort hélicoïdal métallique.

Le clapet anti-siphon 36 comprend un dispositif de commande auxiliaire. Le dispositif de commande auxiliaire est entraîné par un fluide, préférentiellement par l'huile refoulée par la pompe d'alimentation 26 via la conduite d'actionnement 38. Le dispositif de commande auxiliaire évolue entre au moins un état ouvert et un état fermé. Il peut être mobile entre au moins l'état ouvert et l'état fermé. Le mouvement d'ouverture peut être une translation et/ou une rotation. Le dispositif de commande auxiliaire est apte à entraîner l'obturateur 50 d'au moins la position de fermeture à la position d'ouverture.

Le dispositif de commande auxiliaire comprend une chambre 54. La chambre 54 est ménagée dans le corps 40 du clapet 36. La chambre 54 présente une forme profilée suivant l'axe de profilage du passage. Préférentiellement la chambre 54 est cylindrique.

Le dispositif de commande auxiliaire comprend également un piston 56 logé dans la chambre 54. Le piston 56 est mobile dans la chambre 54. Le piston 56 est ajusté à la surface intérieure de la chambre 54. Le contact entre la surface intérieure de la chambre 54 et la surface extérieure du piston 56 forme essentiellement une étanchéité.

Le corps 40 du clapet anti-siphon 36 comprend un conduit d'actionnement 58 en communication avec la conduite d'actionnement 38 et la chambre 54. Il débouche dans la chambre 54, entre l'obturateur et le dispositif de commande auxiliaire lorsque ce dernier est dans l'état fermé. Pour augmenter la surface sur laquelle s'applique la pression de refoulement de la pompe d'alimentation 26 sur le dispositif de commande auxiliaire dans l'état fermé, la chambre 54 comprend une gorge annulaire 60 ouverte axialement vers le dispositif de commande auxiliaire. La gorge annulaire 60 communique avec le conduit d'actionnement 58 et le dispositif de commande auxiliaire. Cette gorge annulaire 60 est avantageuse lorsque l'huile est pâteuse dans la chambre puisqu'elle augmente la surface du piston soumise à la pression de l'huile.

La chambre 54 est ouverte du côté opposé à l'obturateur 50. Elle peut déboucher dans le réservoir 16. Le côté de la chambre 54 situé du côté ouvert peut comprendre un exutoire 62 débouchant du corps 40. Eventuellement, la chambre présente une section constante jusqu'à l'extérieur du clapet.

Le clapet 36 comprend une paroi 64 disposée entre le passage 46 et la chambre 54. La paroi 64 clos d'un côté le passage et la chambre 54 de l'autre côté. La paroi 64 est généralement plane et comprend un orifice 66 disposé entre le passage et la chambre.

Le clapet 36 comprend des moyens de liaison qui sont aptes à transmettre un mouvement du dispositif de commande auxiliaire à l'obturateur 50. Les moyens de liaison comprennent un système de butée. Le système de butée comprend une tige 70 avec une butée 72 à l'une de ses extrémités. La tige 70 traverse l'orifice 66 de la paroi 64. La butée 72 forme une fin de course pour le piston 56 lorsqu'il évolue sur la tige 70. La tige 70, le piston 56 et la chambre 54 forment un vérin.

La tige 70 peut être solidaire de l'obturateur et autoriser une translation du piston 56 sur la tige 70. Inversement, la tige 70 peut être solidaire du piston et autoriser une translation l'obturateur sur la tige. Ou encore, la tige peut être mobile par rapport à l'obturateur et autoriser à la fois une translation de l'obturateur et une translation du piston par rapport à ladite tige. La tige présente alors une butée à chacune de ses extrémités.

L'avantage à rendre solidaire la tige de l'obturateur est que l'on évite le basculement de ce dernier dans le passage. En effet, la tige apporte de la stabilité puisqu'elle est engagée dans l'orifice de la paroi. On évite ainsi des coincements.

Eventuellement, les moyens de liaison peuvent comprendre un lien souple, tel un câble apte à transmettre un mouvement de traction entre le piston et l'obturateur.

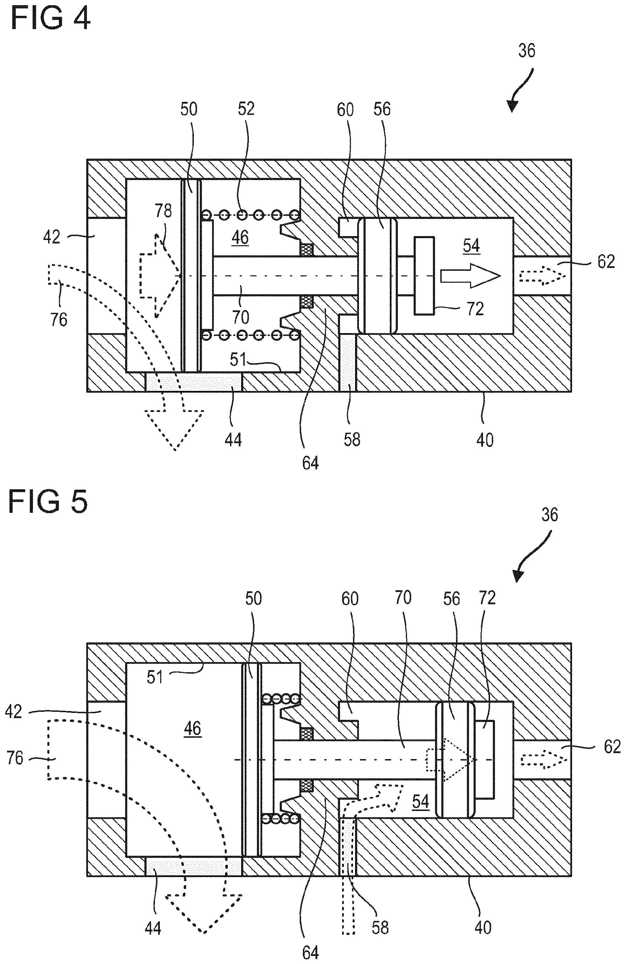

La figure 4 représente le clapet 36 dans un état d'ouverture partielle. Cet état correspond à une configuration où le piston est retenu par l'huile figée dans la chambre 54 et/ou le conduit d'actionnement 58.

Dans cet état, la pression d'aspiration provoque un début d'ouverture du clapet 36 et permet une circulation 76 d'huile. Puis, la pression dynamique 78 de la circulation 76 de l'huile poursuit l'ouverture du clapet 36. L'obturateur 50 est distant du siège 48 et mais demeure à hauteur axialement de la sortie 44. Il commence à permettre une communication entre l'entrée 42 et la sortie 44. La tige 70 se déplace et la butée 72 s'éloigne du piston 56.

Il est remarquable que dans cet état, le piston est encore dans l'état fermé à cause du collage provoqué par l'huile. Mais comme la tige peut se déplacer librement par rapport au piston le mouvement d'ouverture de l'obturateur n'est pas bloqué tel que dans l'état de l'art.

La figure 5 représente le clapet 36 dans un état ouvert, la circulation 76 d'huile étant totalement permise.

Dans cet état, l'huile du circuit d'alimentation retrouve une certaine fluidité. L'huile peut circuler via le conduit d'actionnement 58 et s'introduire, se répandre dans la chambre 54. Elle permet l'actionnement du dispositif de commande auxiliaire. Le piston 56 se déplace sur la tige 70. Il se déplace jusqu'à atteindre la butée 72. Dès lors, il entraîne la tige 70 via la butée 72, et donc l'obturateur.

Lorsque le piston 56 arrive en bout de course contre la butée, l'obturateur libère essentiellement la sortie. L'obturateur se déplace avantageusement à distance axialement de la sortie 44. L'huile contenue dans la chambre 54 du côté opposé à l'obturateur 50 s'échappe via l'exutoire 62 et est expulsée dans le réservoir.

## Revendications

1. Clapet anti-siphon (36) pour réservoir (16) de fluide, notamment pour réservoir d'huile, comprenant :
- un corps (40) avec une entrée (42), une sortie (44) et un passage (46) pour le fluide, le passage reliant l'entrée à la sortie ;
- un obturateur (50) mobile coopérant avec un siège (48) en vue de fermer le passage (46), l'obturateur (50) étant normalement en position de fermeture et configuré pour ouvrir le passage en présence d'une différence de pression entre l'entrée (42) et la sortie (44) qui soit supérieure à une valeur limite positive ;
- un dispositif de commande auxiliaire (54,56) de l'obturateur (50) vers une position d'ouverture du passage (46) ;
**caractérisé en ce que**
le clapet anti-siphon (36) comprend des moyens de liaison (70,72) configurés pour transmettre un mouvement du dispositif de commande auxiliaire (54,56) à l'obturateur (50) que dans le sens d'ouverture du passage (46), de manière à permettre audit obturateur (50) de se déplacer dans le sens d'ouverture sous l'effet de la différence pression, indépendamment dudit dispositif.

2. Clapet anti-siphon (36) selon la revendication 1, **caractérisé en ce que** le dispositif de commande auxiliaire (54,56) est actionné par un fluide, préférentiellement un liquide.

3. Clapet anti-siphon (36) selon l'une des revendications 1 et 2, **caractérisé en ce que** le dispositif de commande auxiliaire comprend un piston (56) relié mécaniquement à l'obturateur (50) par les moyens de liaison comprenant un système de butée (70, 72) lorsque le piston (56) se déplace dans le sens correspondant à l'ouverture du passage.

4. Clapet anti-siphon (36) selon la revendication 3, **caractérisé en ce que** le système de butée comprend une tige (70) coulissant au travers du piston (56) et comprenant une butée (72) avec laquelle le piston (56) vient en contact lorsqu'il se déplace dans le sens correspondant à l'ouverture du passage (46), préférentiellement la tige (70) étant solidaire de l'obturateur (50).

5. Clapet anti-siphon (36) selon l'une des revendications 3 et 4, **caractérisé en ce que** le clapet anti-siphon (36) comprend une chambre (54) dans laquelle le piston (56) est monté coulissant.

6. Clapet anti-siphon (36) selon l'une des revendications 1 à 5, **caractérisé en ce que** le passage (46) comprend une surface intérieure (51) qui correspond au contour de l'obturateur (50) lors de son mouvement entre la position de fermeture et la position d'ouverture, préférentiellement le contour de l'obturateur (50) balaye la sortie (44) lors de son mouvement entre la position de fermeture et la position d'ouverture.

7. Clapet anti-siphon (36) selon l'une des revendications 1 à 6, **caractérisé en ce que** le clapet anti-siphon (36) comprend un ressort (52) configuré pour maintenir l'obturateur (50) en position de fermeture, préférentiellement le ressort (52) étant disposé entre l'obturateur (50) et le dispositif de commande auxiliaire.

8. Clapet anti-siphon (36) selon la revendication 7, **caractérisé en ce que** le ressort (52) est précontraint de sorte à ce que la valeur limite de la différence de pression qui permet d'ouvrir le passage (44) soit supérieure à 0,05 bar ; préférentiellement 0,10 bar ; plus préférentiellement 0,50 bar.

9. Clapet anti-siphon (36) selon l'une des revendications 1 à 8, **caractérisé en ce que** le clapet anti-siphon (36) comprend une gorge annulaire (60) ouverte axialement vers le dispositif de commande auxiliaire (54,56), préférentiellement le dispositif de commande auxiliaire étant apte à clore la gorge annulaire (60).

10. Réservoir (16) pour fluide, notamment pour huile, comprenant au moins une ouverture et un clapet anti-siphon (36) destiné à fermer la au moins une ouverture, **caractérisé en ce que** le clapet anti-siphon (36) est conforme à l'une des revendications 1 à 9.

11. Réservoir (16) selon la revendication 10, **caractérisé en ce que** le clapet anti-siphon (36) est conforme à la revendication 5, la chambre (54) dudit clapet débouchant dans le réservoir (16).

12. Réservoir (16) selon l'une des revendications 10 et 11, **caractérisé en ce que** le clapet anti-siphon (36) comprend un conduit d'actionnement (58) communiquant avec l'extérieur du réservoir (16) et le dispositif de commande auxiliaire.

13. Réservoir (16) selon l'une des revendications 10 à 12, **caractérisé en ce qu'**il comprend un échangeur de chaleur apte à échanger des calories entre de l'air et un liquide.

14. Réservoir (16) selon l'une des revendications 10 à 13, **caractérisé en ce qu'**il comprend une enveloppe (34), le clapet anti-siphon (36) étant disposé à l'intérieur de l'enveloppe (34), préférentiellement le corps (40) du clapet anti-siphon (36) étant en contact de l'enveloppe ; ou le clapet anti-siphon étant disposé à l'extérieur de l'enveloppe, préférentiellement le corps (40) du clapet anti-siphon (36) étant à distance de l'enveloppe (34).

15. Turbomachine (2), notamment d'aéronef, comprenant un réservoir (16) et/ou un clapet anti-siphon (36), **caractérisée en ce que** le clapet anti-siphon (36) est conforme à l'une des revendications 1 à 9 et/ou le réservoir (16) est conforme à l'une des revendications 10 à 14.

## Patentansprüche

1. Ein Anti-Siphon-Ventil (36) für einen Flüssigkeitstank (16), insbesondere für einen Öltank, das Folgendes umfasst:
- einen Körper (40) mit einem Einlass (42), einem Auslass (44) und einem Durchlass (46) für die Flüssigkeit, wobei der Durchlass den Einlass mit dem Auslass verbindet;
- einen beweglichen Verschluss (50), der mit einem Sitz (48) zusammenwirkt, um den Durchlass (46) zu verschließen, wobei der Verschluss (50) normalerweise in geschlossener Position ist und so gestaltet ist, dass er den Durchlass bei einer Druckdifferenz zwischen dem Einlass (42) und dem Auslass (44) öffnet, die größer als ein positiver Grenzwert ist;
- eine Hilfssteuervorrichtung (54, 56), um den Verschluss (50) in eine Position zu bewegen, in der der Durchlass (46) offen ist;
**dadurch gekennzeichnet, dass**
das Anti-Siphon-Ventil (36) Verbindungsmittel (70, 72) umfasst, die so gestaltet sind, dass sie eine Bewegung von der Hilfssteuervorrichtung (54, 56) auf den Verschluss (50) nur in der Öffnungsrichtung des Durchlasses (46) übertragen, so dass sich der Verschluss (50) unter der Wirkung der Druckdifferenz unabhängig von der Vorrichtung in der Öffnungsrichtung bewegen kann.

2. Das Anti-Siphon-Ventil (36) nach Anspruch 1, **dadurch gekennzeichnet, dass** die Hilfssteuereinrichtung (54, 56) durch eine Flüssigkeit, vorzugsweise ein Fluid, betätigt wird.

3. Das Anti-Siphon-Ventil (36) nach einem der Ansprüche 1 und 2, **dadurch gekennzeichnet, dass** die Hilfssteuervorrichtung einen Kolben (56) umfasst, der mechanisch mit dem Verschluss (50) durch Verbindungsmittel verbunden ist, die ein Anschlagsystem (70, 72) umfassen, wenn sich der Kolben (56) in die Richtung bewegt, die der Öffnung des Durchlasses entspricht.

4. Das Anti-Siphon-Ventil (36) nach Anspruch 3, **dadurch gekennzeichnet, dass** das Anschlagsystem eine Stange (70) umfasst, die durch den Kolben (56) gleitet und einen Anschlag (72) aufweist, mit dem der Kolben (56) in Kontakt kommt, wenn er sich in die Richtung bewegt, die der Öffnung des Verschlusses (46) entspricht, wobei die Stange (70) vorzugsweise fest mit dem Verschluss (50) verbunden ist.

5. Das Anti-Siphon-Ventil (36) nach einem der Ansprüche 3 und 4, **dadurch gekennzeichnet, dass** das Anti-Siphon-Ventil (36) eine Kammer (54) aufweist, in der der Kolben (56) verschiebbar gelagert ist.

6. Das Anti-Siphon-Ventil (36) nach einem der Ansprüche 1 bis 5, **dadurch gekennzeichnet, dass** der Durchlass (46) eine Innenfläche (51) aufweist, die der Kontur des Verschlusses (50) während seiner Bewegung zwischen der geschlossenen Position und der offenen Position entspricht, vorzugsweise die Kontur des Verschlusses (50), die den Auslass (44) überstreicht, während er sich zwischen der geschlossenen Position und der offenen Position bewegt.

7. Das Anti-Siphon-Ventil (36) nach einem der Ansprüche 1 bis 6, **dadurch gekennzeichnet, dass** das Anti-Siphon-Ventil (36) eine Feder (52) umfasst, die so gestaltet ist, dass sie den Verschluss (50) in der geschlossenen Position hält, wobei die Feder (52) vorzugsweise zwischen dem Verschluss (50) und der Hilfssteuereinrichtung angeordnet ist.

8. Das Anti-Siphon-Ventil (36) nach Anspruch 7, **dadurch gekennzeichnet, dass** die Feder (52) so vorgespannt ist, dass der Grenzwert der Druckdifferenz, die das Öffnen des Auslasses (44) ermöglicht, größer als 0,05 bar ist; vorzugsweise 0,10 bar; noch bevorzugter 0,50 bar.

9. Das Anti-Siphon-Ventil (36) nach einem der Ansprüche 1 bis 8, **dadurch gekennzeichnet, dass** das Anti-Siphon-Ventil (36) eine Ringnut (60) aufweist, die sich axial in Richtung der Hilfssteuervorrichtung (54, 56) öffnet, wobei die Hilfssteuervorrichtung vorzugsweise geeignet ist, die Ringnut (60) zu schließen.

10. Ein Flüssigkeitstank (16), insbesondere Öl, mit mindestens einer Öffnung und einem Anti-Siphon-Ventil (36) zum Verschließen der mindestens einen Öffnung, **dadurch gekennzeichnet, dass** das Anti-Siphon-Ventil (36) nach einem der Ansprüche 1 bis 9 ausgebildet ist.

11. Der Flüssigkeitstank (16) nach Anspruch 10, **dadurch gekennzeichnet, dass** das Anti-Siphon-Ventil (36) nach Anspruch 5 ist, wobei die Kammer (54) des Ventils in den Flüssigkeitstank (16) mündet.

12. Der Flüssigkeitstank (16) nach einem der Ansprüche 10 und 11, **dadurch gekennzeichnet, dass** das Anti-Siphon-Ventil (36) einen Betätigungskanal (58) umfasst, der mit der Außenseite des Flüssigkeitstanks(16) und der Hilfssteuervorrichtung verbunden ist.

13. Der Flüssigkeitstank (16) nach einem der Ansprüche 10 bis 12, **dadurch gekennzeichnet, dass** er einen Wärmetauscher umfasst, der dazu geeignet ist, Kalorien zwischen Luft und einer Flüssigkeit auszutauschen.

14. Der Flüssigkeitstank (16) nach einem der Ansprüche 10 bis 13, **dadurch gekennzeichnet, dass** er ein Gehäuse (34) umfasst, wobei das Anti-Siphon-Ventil (36) innerhalb des Gehäuses (34) angeordnet ist, wobei vorzugsweise der Körper (40) des Anti-Siphon-Ventils (36) in Kontakt mit dem Gehäuse ist; oder das Anti-Siphon-Ventil außerhalb des Gehäuses angeordnet ist, wobei vorzugsweise der Körper (40) des Anti-Siphon-Ventils (36) in einem Abstand zum Gehäuse (34) ist.

15. Eine Turbomaschine (2), insbesondere für Flugzeuge, mit einem Flüssigkeitstank (16) und/oder einem Anti-Siphon-Ventil (36), **dadurch gekennzeichnet, dass** das Anti-Siphon-Ventil (36) nach einem der Ansprüche 1 bis 9 und/oder der Flüssigkeitstank (16) nach einem der Ansprüche 10 bis 14 ausgeführt ist.

## Claims

1. An anti-siphon valve (36) for a fluid tank (16), in particular for an oil tank, comprising:
- a body (40) with an inlet (42), an outlet (44) and a passage (46) for the fluid, the passage connecting the inlet to the outlet ;
- a movable obturator (50) cooperating with a seat (48) in order to close the passage (46), the obturator (50) being normally in the closed position and configured to open the passage in the presence of a pressure difference between the inlet (42) and the outlet (44) greater than a positive limit value;
- an auxiliary control device (54, 56) for moving the obturator (50) towards a position in which the passage (46) is open;
**characterized in that**
the anti-siphon valve (36) comprises connecting means (70, 72) configured to transmit a movement from the auxiliary control device (54, 56) to the obturator (50) only in the direction of opening of the passage (46), so as to enable said obturator (50) to move in the opening direction under the effect of the pressure difference, independently of said device.

2. The anti-siphon valve (36) according to claim 1, **characterized in that** the auxiliary control device (54, 56) is actuated by a fluid, preferably a liquid.

3. The anti-siphon valve (36) according to one of claims 1 and 2, **characterized in that** the auxiliary control device comprises a piston (56) mechanically connected to the obturator (50) by connecting means comprising a stop system (70, 72) when the piston (56) moves in the direction corresponding to the opening of the passage.

4. The anti-siphon valve (36) according to claim 3, **characterized in that** the stop system comprises a rod (70) sliding through the piston (56) and comprising a stop (72) with which the piston (56) comes into contact when it moves in the direction corresponding to the opening of the passage (46), preferably the rod (70) being integral with the obturator (50).

5. The anti-siphon valve (36) according to one of claims 3 and 4, **characterized in that** the anti-siphon valve (36) comprises a chamber (54) in which the piston (56) is slidably mounted.

6. The anti-siphon valve (36) according to one of claims 1 to 5, **characterized in that** the passage (46) comprises an inner surface (51) which corresponds to the contour of the obturator (50) during its movement between the closed position and the open position, preferably the contour of the obturator (50) sweeping the outlet (44) as it moves between the closed position and the open position.

7. The anti-siphon valve (36) according to one of claims 1 to 6, **characterized in that** the anti-siphon valve (36) comprises a spring (52) configured to hold the obturator (50) in the closed position, preferably the spring (52) being disposed between the obturator (50) and the auxiliary control device.

8. The anti-siphon valve (36) according to claim 7, **characterized in that** the spring (52) is pre-tensioned so that the limit value of the pressure difference which allows the passage (44) to be opened is greater than 0.05 bar; preferably 0.10 bar; more preferably 0.50 bar.

9. The anti-siphon valve (36) according to one of claims 1 to 8, **characterized in that** the anti-siphon valve (36) comprises an annular groove (60) which opens axially towards the auxiliary control device (54, 56), preferably the auxiliary control device being capable of closing the annular groove (60).

10. A tank (16) for fluid, in particular oil, comprising at least one opening and an anti-siphon valve (36) for closing the at least one opening, **characterized in that** the anti-siphon valve (36) is in accordance with one of claims 1 to 9.

11. The tank (16) according to claim 10, **characterized in that** the anti-siphon valve (36) is in accordance with claim 5, the chamber (54) of said valve opening into the tank (16).

12. The tank (16) according to one of claims 10 and 11, **characterized in that** the anti-siphon valve (36) comprises an actuating duct (58) communicating with the outside of the tank (16) and the auxiliary control device.

13. The tank (16) according to one of claims 10 to 12, **characterized in that** it comprises a heat exchanger capable of exchanging calories between air and a liquid.

14. The tank (16) according to one of claims 10 to 13, **characterized in that** it comprises a casing (34), the anti-siphon valve (36) being arranged inside the casing (34), preferably the body (40) of the anti-siphon valve (36) being in contact with the casing; or the anti-siphon valve being arranged outside the casing, preferably the body (40) of the anti-siphon valve (36) being at a distance from the casing (34).

15. A turbomachine (2), in particular for aircraft, comprising a tank (16) and/or an anti-siphon valve (36), **characterized in that** the anti-siphon valve (36) is in accordance with one of claims 1 to 9 and/or the tank (16) is in accordance with one of claims 10 to 14.
